# EUROPÄISCHE PATENTSCHRIFT

(11) **EP 0 861 208 B1**
(45) Veröffentlichungstag und Bekanntmachung des Hinweises auf die Patenterteilung: **28.11.2001**
(21) Anmeldenummer: 96937331.5
(22) Anmeldetag: 02.11.1996
(51) Int. Cl.: C01F 7/44

(54) **VERFAHREN ZUR HERSTELLUNG VON ALUMINIUMOXID AUS ALUMINIUMHYDROXID**
PROCESS FOR PRODUCING ALUMINIUM OXIDE FROM ALUMINIUM HYDROXIDE
PROCEDE DE PRODUCTION D'OXYDE D'ALUMINIUM A PARTIR D'HYDROXYDE D'ALUMINIUM

(30) Priorität: 14.11.1995 DE 19542309
(43) Veröffentlichungstag der Anmeldung: 02.09.1998
(73) Patentinhaber: mg technologies ag, 60325 Frankfurt am Main (DE)
(72) Erfinder: SCHMIDT, Hans, Werner, D-60599 Frankfurt am Main (DE); RAHN, Martin, D-60433 Frankfurt am Main (DE); STOCKHAUSEN, Werner, D-61118 Bad Vilbel (DE); WERNER, Dietrich, D-64409 Messel (DE); HIRSCH, Martin, D-61381 Friedrichsdorf (DE)
(74) Vertreter: Revesz, Veronika
(86) Internationale Anmeldenummer: EP9604764
(87) Internationale Veröffentlichungsnummer: WO9718165

(56) Entgegenhaltungen:
- FR-A- 1 559 441
- FR-A- 2 032 925
- FR-A- 2 313 120
- FR-A- 2 559 572
- GB-A- 2 019 369
- Lurgi A.G. Presse Information, nr 35, date: 7.10.1998

## Beschreibung

Die Erfindung betrifft ein Verfahren zur Herstellung von wasserfreiem Aluminiumoxid aus Aluminiumhydroxid in einer zirkulierenden Wirbelschicht, die aus einem Wirbelschichtreaktor (8), einem mit dem oberen Bereich des Reaktors verbundenen Abscheider (6) und einer vom Abscheider zum unteren Bereich des Reaktors geführten Rückführleitung für Feststoffe besteht,
bei dem man das Al-Hydroxid in einen ersten Suspensionsvorwärmer (2) einträgt und Abgas aus dem Abscheider (6) zunächst durch einen zweiten Suspensionsvorwärmer (5) und eine zweite Abscheidevorrichtung (7) und dann durch den ersten Suspensionsvorwärmer leitet, wobei man Abgas und teilweise entwässertes Al-Hydroxid aus dem ersten Vorwärmer in eine erste Abscheidevorrichtung (3) leitet und daraus einen staubhaltigen Abgasstrom und, davon getrennt, teilweise entwässertes Al-Hydroxid abzieht,
teilweise entwässertes Al-Hydroxid aus der ersten Abscheidevorrichtung (3) wird durch den zweiten Suspensionsvorwärmer (5), durch die zweite Abscheidevorrichtung (7) und von da als entwässertes Al-Hydroxid in den Wirbelschichtreaktor (8) geleitet, in welchem durch Verbrennen von Brennstoff die Temperaturen im Bereich von 850 bis 1000°C liegen,
wasserfreies heißes Al-Oxid wird als Partialstrom (13) aus der Rückführleitung des Abscheiders (6) abgezweigt und durch indirekten Wärmeaustausch in einem Wirbelschichtkühler (23) mit Luft direkt und indirekt gekühlt, die dabei indirekt erwärwmte Luft wird als Fluidisierungsluft (10) in den Wirbelschichtreatkor geleitet, mindestens einem Wirbelbett des Wirbelschichtkühlers wird Fluidisierungsluft zugeführt, welche man aus dem Kühler (23) abzieht und als Sekundärluft ebenfalls in den Wirbelschichtreaktor leitet.

Ein solches Verfahren ist aus FR-A 1 559 441 bekannt; ein ähnliches Verfahren, das ebenfalls auf der zirkulierenden Wirbelschicht basiert, ist in FR-A-2 313 120 beschrieben. Ein aus GB-A-2 019 369 bekanntes Verfahren arbeitet bei Temperaturen oberhalb 1200°C und ohne Verwendung eines Wirbelbettes, dabei wird ein Produkt mit hohem Anteil an Alpha-Al₂O₃ erzeugt.

Der Erfindung liegt die Aufgabe zugrunde, vom bekannten, auf der zirkulierenden Wirbelschicht basierenden Verfahren ausgehend, Aluminium-Oxid von erhöhter und insbesondere sandiger Qualität zu erzeugen. Dabei soll dieses Produkt einen hohen Gamma-Oxid-Anteil aufweisen und mit minimalem Wärmeverbrauch erzeugt werden können. Die Aufgabe wird beim eingangs genannten Verfahren durch die kennzeichnenden Merkmale des Patentanspruchs 1 gelöst.

Das beim erfindungsgemäßen Verfahren eingesetzte System der zirkulierenden Wirbelschicht besteht aus einem Wirbelschichtreaktor, einem Abscheider zum Abscheiden von Feststoff aus der aus dem Wirbelschichtreaktor ausgetragenen Suspension - im allgemeinen einem Rückführzyklon - und einer Rückführleitung für den abgeschiedenen Feststoff in den Wirbelschichtreaktor. Das Prinzip der zirkulierenden Wirbelschicht zeichnet sich dadurch aus, daß im Unterschied zur "klassischen" Wirbelschicht, bei der eine dichte Phase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Staubraum ist nicht vorhanden, jedoch nimmt innerhalb des Reaktors die Feststoffkonzentration von unten nach oben ab. Aus dem oberen Teil des Reaktors wird eine Gas-Feststoffsuspension ausgetragen.

Die Vermischung der Feststoffströme, die einerseits über den Bypass aus dem ersten Suspensionsvorwärmer (2)herrühren und andererseits aus der zirkulierenden Wirbelschicht stammen, für die Dauer von mindestens 2 min ist verfahrenswesentlich. Denn nur dann ist eine hinreichende Abspaltung des chemisch gebundenen Wassers, das im mindestens teilweise entwässerten Aluminiumhydroxid noch enthalten ist und damit die Erzielung eines hinreichend niedrigen Glühverlustes gewährleistet. Die Vermischung der Feststoffströme erfolgt besonders vorteilhaft durch Verwirbelung des beim Vermischen entstehenden Wasserdampfes.

Die Wirbelgasgeschwindigkeit oberhalb der Sekundärgaszuführung beträgt im allgemeinen 7 bis 10 m/sec, eine vorteilhafte Ausgestaltung des Verfahrens besteht darin, den Druckverlust im Wirbelschichtreaktor, der eine Funktion des Feststoffinhalts ist, auf weniger als 100 mbar einzustellen.

Nach einer weiteren Ausgestaltung des Verfahrens ist es vorteilhaft, die Schlußkühlung des erzeugten Aluminiumoxids durch mehrstufige Wirbelkühlung durchzuführen, wobei jeweils durch indirekten Wärmeaustausch in der ersten Stufe das Fluidisierungsgas für den Wirbelschichtreaktor der zirkulierenden Wirbelschicht und in den nachfolgenden Stufen ein flüssiges Wärmeträgermedium erhitzt wird. Hierdurch läßt sich die zur Kalzinatkühlung eingesetzte Luftmenge in einfachster Weise an den Fluidisierungsluftbedarf des Wirbelschichtreaktors der zirkulierenden Wirbelschicht anpassen.

Der herausragende Vorteil des erfindungsgemäßen Verfahrens liegt darin, daß man den Kalzinierprozeß einschließlich Vorwärmung und Kühlung in einfachster Weise den jeweiligen Qualitätsanforderungen anpassen kann. Denn im allgemeinen ist es üblich, daß eine bestimmte Produktqualität hinsichtlich BET-Oberfläche, Glühverlust und Alpha-Oxid gefordert ist. Hieraus ergibt sich die in der zirkulierenden Wirbelschicht einzustellende Reaktionstemperatur und die als Bypass an der zirkulierenden Wirbelschicht vorbeizuführende, lediglich entwässerte Aluminiumhydroxidmenge. Das bedeutet, daß mit steigender BET-Oberfläche sowohl die Kalziniertemperatur in der zirkulierenden Wirbelschicht als auch die Bypass-Menge für Aluminiumhydroxid in Richtung auf die unteren beanspruchten Grenzwerte einzustellen ist. Umgekehrt sind mit sinkender BET-Oberfläche die vorgenannten Werte in Richtung der oberen beanspruchten Grenzwerte zu verschieben. Bei zulässigem höherem Glühverlust kann die Bypass-Menge für Aluminiumhydroxid bei sonst konstanten Betriebsbedingungen, insbesondere bei konstanter Kalziniertemperatur, weiter innerhalb der beanspruchten Grenzen erhöht werden. Dadurch ist eine weitere Reduktion der Wärmeverbrauchszahl erreichbar.

Ein weiterer Vorteil des erfindungsgemäßen Verfahrens besteht in einer Wärmeverbrauchszahl, die - in Abhängigkeit von der Qualitätsanforderung, die an das erzeugte Aluminiumoxid gestellt ist - deutlich unter den bislang üblichen Werten liegt.

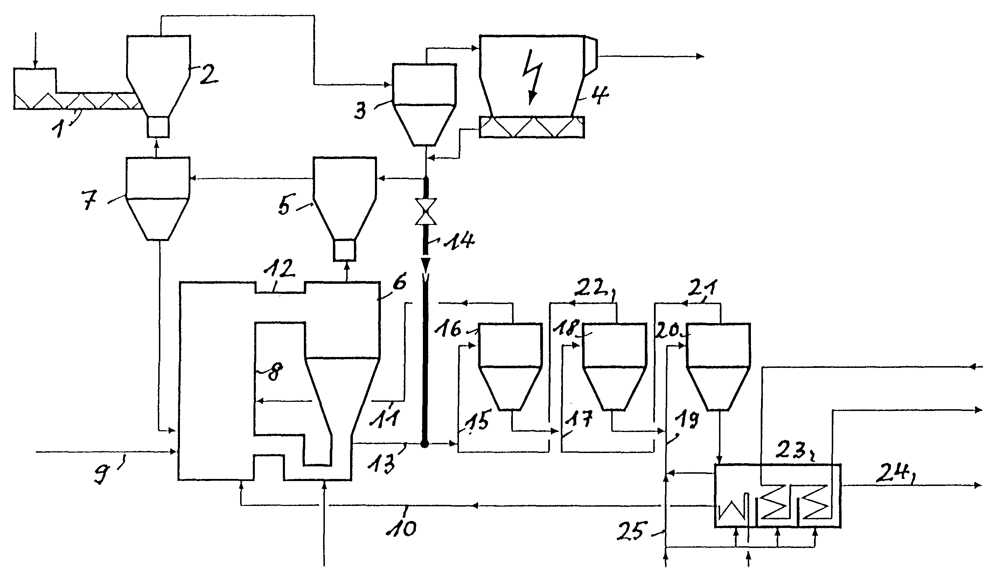

Die Erfindung wird anhand der Figur und des Ausführungsbeispiels beispielsweise und näher erläutert.

Die Figur stellt ein Fließschema des erfindungsgemäßen Verfahrens dar.

Das filterfeuchte Aluminiumhydroxid wird mittels einer Förderschnecke (1) in den ersten Suspensionsvorwärmer (2) eingetragen und von dem aus dem zweiten Suspensionsvorwärmer (5) kommenden Abgasstrom erfaßt. Anschließend wird der Gas-Materialstrom in dem nachfolgenden Zyklonabscheider (3) getrennt. Das aus dem Zyklonabscheider (3) austretende Abgas wird zur Entstaubung einer elektrostatischen Gasreinigung (4) und schließlich einem Kamin (nicht dargestellt) zugeleitet.

Der aus dem Zyklonabscheider (3) und der elektrostatischen Gasreinigung austretende Feststoff gelangt anschließend mittels einer Dosiervorrichtung zum überwiegenden Teil in den zweiten Suspensionsvorwärmer (5), zum kleineren Teil in die Bypass-Leitung (14). Im zweiten Suspensionsvorwärmer (5) wird der Feststoff von dem aus dem Rückführzyklon (6) der zirkulierenden Wirbelschicht austretenden Abgas erfaßt und weiter entwässert bzw. dehydratisiert. Im Abscheidezyklon (7) tritt wiederum eine Trennung des Gas-Material-Stromes ein, wobei das entwässerte Material in den Wirbelschichtreaktor (8) und das Abgas in den ersten Suspensionsvorwärmer (2) geleitet wird.

Die Zuführung des zur Kalzination erforderlichen Brennstoffes erfolgt über die Leitung (9), die in geringer Höhe über dem Rost des Wirbelschichtreaktors (8)angeordnet ist. Die zur Verbrennung erforderlichen sauerstoffhaltigen Gasströme werden über die Leitung (10) als Fluidisierungsgas und über die Leitung (11) als Sekundärgas zugeführt. Infolge der Gaszuführung in Form von Fluidisierungsgas und Sekundärgas stellt sich im unteren Reaktorbereich zwischen Rost und Sekundärgaszuführung (11) eine vergleichsweise hohe Suspensionsdichte, oberhalb der Sekundärgaszuführung (11) eine vergleichsweise geringe Suspensionsdichte ein.

Die Gas-Feststoff-Suspension tritt über die Verbindungsleitung (12) in den Rückführzyklon (6) der zirkulierenden Wirbelschicht ein, in dem eine neuerliche Trennung von Feststoff und Gas erfolgt. Der über die Leitung (13) aus dem Rückführzyklon (6) austretende Feststoff wird mit einem Teil des aus dem Zyklon (3) und der elektrostatischen Gasreinigung stammenden Feststoffes, der über die Bypass-Leitung (14) herangeführt wird, vermischt und dem ersten aus Steigleitung (15) und Zyklonabscheider (16) gebildeten Suspensionskühler zugeleitet. Das Abgas des Zyklonabscheiders (16) gelangt über die Leitung (11) in den Wirbelschichtreaktor (8), der Feststoff in den aus Steigleitung (17) und Zyklonabscheider (18) gebildeten zweiten Suspensionskühler und schließlich in den aus Steigleitung (19) und Zyklonabscheider (20)gebildeten dritten Suspensionskühler. Der Gasfluß durch die einzelnen Suspensionskühler erfolgt im Gegenstrom zum Feststoff über die Leitungen (21) und (22). Nach dem Verlassen des letzten Suspensionskühlers erfährt das erzeugte Aluminiumoxid eine Schlußkühlung in dem mit drei Kühlkammern ausgestatteten Wirbelschichtkühler (23). In dessen erster Kammer erfolgt eine Aufheizung des dem Wirbelschichtreaktor (8) zugeführten Fluidisierungsgases, in den nachgeschalteten zwei Kammern eine Kühlung gegen ein Wärmeträgermedium, vorzugsweise Wasser, das im Gegenstrom geführt wird. Das Aluminiumoxid tritt schließlich durch die Leitung (24) aus.

### Beispiel:

Mit Hilfe der Förderschnecke (1) werden dem ersten Suspensionsvorwärmer (2) 126360 kg/h Aluminiumhydroxid mit 7 Gew.% mechanisch gebundenem Wasser zugeführt. Durch das aus dem Zyklonabscheider (7) mit einer Temperatur von 306°C herangeführte Abgas erfolgt eine erste Trocknung. Der Feststoff wird nach Abscheidung im Zyklonabscheider (3) im zweiten Suspensionsvorwärmer (5) einer weiteren Trocknung und Entwässerung mit den aus dem Rückführzyklon (6) der zirkulierenden Wirbelschicht herangeführten Abgasen einer Temperatur von 950°C unterworfen. Das aus dem letzten Zyklonabscheider (3) austretende Abgas wird anschließend im Elektrofilter (4) entstaubt und dem Kamin zugeführt. Seine Menge beträgt 132719 Nm³/h. Der im Zyklonabscheider (7) anfallende Feststoff wird schließlich in den Wirbelschichtreaktor (8) der zirkulierenden Wirbelschicht eingetragen.

Die zirkulierende Wirbelschicht wird bei einer Temperatur von 950°C betrieben. Ihr werden über Leitung (9) 5123 kg/h Heizöl, über Leitung (11) 60425 Nm³/h Sekundärluft und über Leitung (10) 12000 Nm³/h Fluidisierungsluft zugeführt. Die Fluidisierungsluft besitzt eine Temperatur von 188°C, die Sekundärluft eine solche von 525°C. Es verlassen die zirkulierende Wirbelschicht ein Gasstrom in einer Menge von 98631 Nm³/h mit einem Sauerstoffgehalt von 2,23 Vol.%, der den Suspensionsvorwärmern (5) und (2) zugeleitet wird, sowie ein Feststoff mit 66848 kg/h. Dieser über Leitung (13) abgeführte Feststoffstrom wird vor dem Eintritt in die Steigleitung (15) des ersten Suspensionskühlers mit 15262 kg/h Feststoff, der durch die Bypass-Leitung (14) herangeführt wird, unter Einstellung einer Mischtemperatur von 608°C vermischt. Nach Durchlaufen der Steigleitung (15) gelangt die Gas-Feststoff-Suspension in den Zyklonabscheider (16) und von dort in die nachfolgenden, aus den Steigleitungen (17) bzw. (19) und Zyklonabscheidern (18) bzw. (20) gebildeten Suspensionskühlern. In den drei Suspensionskühlern erfolgt eine stufenweise Abkühlung des Feststoffes auf 525°C bzw. 412°C bzw. 274°C. Gleichzeitig heizt sich der dem Wirbelschichtreaktor (8) über die Leitung (11) zugeführte Sekundärgasstrom auf eine Temperatur von 525°C auf. Der Betrieb der Suspensionskühler erfolgt mit der direkt aufgeheizten Fluidisierungsluft des nachfolgenden Wirbelschichtkühlers (23) sowie mit über die Leitung (25) zugeführter Prozeßluft in einer Menge von 33000 Nm³/h.

Die Endkühlung des Feststoffes geschieht im Wirbelschichtkühler (23), dessen erste Kammer mit 7.200 Nm³/h und dessen 2. und 3. Kammer mit jeweils 7000 Nm³/h Fluidisierungsluft beaufschlagt werden. Die in den einzelnen Kammern erzielten Temperaturen des Feststoffes betragen 238°C, 135°C und 83°C. Die in der ersten Kammer des Wirbelschichtkühlers (23) zur Kühlung benutzte Luft in einer Menge von 12000 Nm³/h, die dem Wirbelschichtreaktor (8) als Fluidisierungsluft zugeführt wird, heizt sich dabei durch indirekten Wärmeaustausch auf 188°C auf. In der zweiten und dritten Kühlkammer des Wirbelschichtkühlers (23) erfolgt eine Aufheizung des Kühlwassers, das im Gegenstrom zum Feststoff durch die Kühlkammern in einer Menge von 350000 kg/h geführt wird von 40°C auf 49°C. Die den Wirbelschichtkühler (23) verlassende Fluidisierungsluft hat eine Temperatur von 153°C und fällt in
einer Menge von 21200 Nm³/h an. Sie wird -wie vorstehend erwähnt- in die Suspensionskühlung eingetragen. Den Wirbelschichtkühler (23) verlassen 77111 kg/h Aluminiumoxid mit einem Glühverlust von 0,5 % und einer BET-Oberfläche von 70 m²/g.

## Patentansprüche

1. Verfahren zur Herstellung von wasserfreiem Aluminiumoxid aus Aluminiumhydroxid in einer zirkulierenden Wirbelschicht, die aus einem Wirbelschichtreaktor (8), einem mit dem oberen Bereich des Reaktors verbundenen Abscheider (6) und einer vom Abscheider zum unteren Bereich des Reaktors geführten Rückführleitung für Feststoffe besteht,
bei dem man das Al-Hydroxid in einen ersten Suspensionsvorwärmer (2) einträgt und Abgas aus dem Abscheider (6) zunächst durch einen zweiten Suspensionsvorwärmer (5) und eine zweite Abscheidevorrichtung (7) und dann durch den ersten Suspensionsvorwärmer leitet, wobei man Abgas und teilweise entwässertes Al-Hydroxid aus dem ersten Vorwärmer in eine erste Abscheidevorrichtung (3) leitet und daraus einen staubhaltigen Abgasstrom und, davon getrennt, teilweise entwässertes Al-Hydroxid abzieht,
teilweise entwässertes Al-Hydroxid aus der ersten Abscheidevorrichtung (3) wird durch den zweiten Suspensionsvorwärmer (5), durch die zweite Abscheidevorrichtung (7) und von da als entwässertes Al-Hydroxid in den Wirbelschichtreaktor (8) geleitet, in welchem durch Verbrennen von Brennstoff die Temperaturen im Bereich von 850 bis 1000°C liegen,
wasserfreies heißens Al-Oxid wird als Partialstrom (13) aus der Rückführleitung des Abscheiders (6) abgezweigt und durch indirekten Wärmeaustausch in einem Wirbelschichtkühler (23) mit Luft direkt und indirekt gekühlt, die dabei indirekt erwärmte Luft wird als Fluidisierungsluft (10) in den Wirbelschichtreaktor geleitet, mindestens einem Wirbelbett des Wirbelschichtkühlers wird Fludisierungsluft zugeführt, welche man aus dem Kühler (23) abzieht und als Sekundärluft ebenfalls in den Wirbelschichtreaktor leitet, **gekennzeichnet durch** die Verfahrensschritte
a) aus dem von der ersten Abscheidevorrichtung (3) kommenden, teilweise entwässerten Al-Hydroxid wird eine Teilmenge von 10 bis 25 Gew.-% der Gesamtmenge abgezweigt und **durch** eine Bypassleitung (14) an der zirkulierenden Wirbelschicht vorbeigeführt, die Restmenge wird **durch** den zweiten Vorwärmer (5) und die zweite Abscheidevorrichtung (7) dem Reaktor (8) aufgegeben,
b) der aus der Rückführleitung abgezweigte Partialstrom (13) wird mit der Teilmenge des teilweise entwässerten Al-Hydroxids aus der Bypassleitung (14) für die Zeitdauer von mindestens 2 Minuten gemischt und dabei ein heißes Produktgemisch erzeugt, und
c) das erzeugte Produktgemisch wird zunächst **durch** einen mehrstufigen Suspensionskühler (15, 16, 17, 18, 19, 20) geleitet, in welchem man es im direkten Kontakt mit Luft kühlt, welche anschließend als Sekundärluft in den Wirbelschichtreaktor (8) geleitet wird, und dann wird das Produktgemisch zur Schlußkühlung im Wirbelschichtkühler (23) in mindestens einem Wirbelbett indirekt mit Luft zur Erzeugung der Fluidisierungsluft (10) gekühlt.

2. Verfahren nach Anspruch 1, **dadurch gekennzeichnet, daß** der Druckverlust im Wirbelschichtreaktor (8) auf weniger als 100 mbar eingestellt wird.

3. Verfahren nach Anspruch 1, **dadurch gekennzeichnet, daß** man den staubhaltigen Abgasstrom aus der ersten Abscheidevorrichtung (3) in einem Elektrofilter entstaubt und den abgeschiedenen Staub dem aus der ersten Abscheidevorrichtung kommenden, teilweise entwässerten Al-Hydroxid zugibt.

4. Verfahren nach Anspruch 1 oder einem der folgenden, **dadurch gekennzeichnet, daß** die Schlußkühlung des Produktgemisches in einem mehrstufigen Wirbelschichtkühler (23) erfolgt, wobei das von der Suspensionskühlung kommende Produktgemisch zunächst in der ersten Kühlstufe durch indirekten Wärmeaustausch mit Luft zur Erzeugung der Fluidisierungsluft (10) für den Wirbelschichtreaktor (8) und anschließend im Kühler (23) im Wirbelzustand durch indirekten Wärmeaustausch mit einer Flüssigkeit gekühlt wird.

## Claims

1. A process for the preparation of anhydrous aluminium oxide from aluminium hydroxide in a circulating fluidised bed, which consists of a fluidised bed reactor (8), a separator (6) connected to the upper region of the reactor and a recycle line for solids leading from the separator to the lower region of the reactor,
in which the aluminium hydroxide is introduced into a first suspension preheater (2) and exhaust gas from the separator (6) is first passed through a second suspension preheater (5) and a second separation device (7) and then through the first suspension preheater, wherein exhaust gas and partially dewatered aluminium hydroxide are passed from the first preheater into a first separation device (3) and a dust-containing exhaust-gas stream and, separately therefrom, partially dewatered aluminium hydroxide are separated off therefrom,
partially dewatered aluminium hydroxide from the first separation device (3) is passed through the second suspension preheater (5), through the second separation device (7) and from there as dewatered aluminium hydroxide into the fluidised bed reactor (8), in which the temperatures are in the range from 850 to 1000°C due to the combustion of fuel,
anhydrous hot aluminium oxide is branched off from the recycle line of the separator (6) as a partial stream (13) and is cooled directly and indirectly with air by indirect heat exchange in a fluidised bed cooler (23), the air heated indirectly thereby is passed into the fluidised bed reactor as fluidising air (10), fluidising air is passed to at least one fluidised bed of the fluidised bed cooler, which air is withdrawn from the cooler (23) and is likewise passed as secondary air into the fluidised bed reactor, **characterised by** the process steps
a) a portion of 10 to 25% by weight of the total quantity of the partially dewatered aluminium hydroxide coming from the first separation device (3) is branched off and carried past the circulating fluidised bed through a bypass line (14), and the remaining quantity is fed to the reactor (8) through the second preheater (5) and the second separation device (7),
b) the partial stream (13) branched off from the recycle line is mixed with the partial quantity of the partially dewatered aluminium hydroxide from the bypass line (14) for a period of at least 2 minutes and in so doing a hot product mixture is produced, and
c) the product mixture which is produced is first passed through a multi-stage suspension cooler (15, 16, 17, 18, 19, 20) in which it is cooled in direct contact with air, which is then passed into the fluidised bed reactor (8) as secondary air, and then the product mixture is cooled indirectly with air in at least one fluidised bed for final cooling in the fluidised bed cooler (23) in order to produce the fluidising air (10).

2. A process according to Claim 1, **characterised in that** the pressure drop in the fluidised bed reactor (8) is set to less than 100 mbar.

3. A process according to Claim 1, **characterised in that** the dust-containing exhaust-gas stream from the first separation device (3) undergoes dust removal in an electrostatic precipitator and the dust which is separated off is added to the partially dewatered aluminium hydroxide coming from the first separation device.

4. A process according to Claim 1 or one of the following claims, **characterised in that** the final cooling of the product mixture takes place in a multi-stage fluidised bed cooler (23), the product mixture coming from the suspension cooling stage first being cooled in the first cooling stage by indirect heat exchange with air to produce the fluidising air (10) for the fluidised bed reactor (8) and then being cooled in the cooler (23) in the fluidised state by indirect heat exchange with a liquid.

## Revendications

1. Procédé de production d'oxyde d'aluminium anhydre à partir d'hydroxyde d'aluminium dans un lit fluidisé circulant qui est constitué d'un réacteur (8) à lit fluidisé, d'un séparateur (6) communiquant avec la partie supérieure du réacteur et d'un conduit de retour des matières solides allant du séparateur à la partie inférieure du réacteur,
dans lequel on introduit l'hydroxyde d'Al dans un premier préchauffeur (2) de suspension, et on envoie le gaz qui sort du séparateur (6) d'abord dans un deuxième préchauffeur (5) de suspension et un deuxième dispositif (7) de séparation, puis dans le premier préchauffeur de suspension, puis on envoie du gaz qui sort du premier préchauffeur et de l'hydroxyde d'Al partiellement déshydraté dans un premier dispositif (3) de séparation dont on soutire un courant de gaz contenant de la poussière et indépendamment de cela de l'hydroxyde d'Al partiellement déshydraté,
on envoie de l'hydroxyde d'Al partiellement déshydraté et sortant du premier dispositif (5) de séparation dans le deuxième préchauffeur (5) de suspension, dans le deuxième dispositif (7) de séparation et de là sous la forme d'hydroxyde d'Al déshydraté dans le réacteur (8) à lit fluidisé dans lequel il règne par combustion de combustible des températures de l'ordre de 850 à 1000°C,
on dérive de l'oxyde d'Al chaud anhydre en tant que courant (13) partiel du conduit de retour du séparateur (6) et on le refroidit directement et indirectement par de l'air par échange de chaleur indirect dans un dispositif (23) de refroidissement à lit fluidisé, on envoie l'air ainsi réchauffé par voie indirecte en tant qu'air (10) de fluidisation au réacteur à lit fluidisé, on envoie de l'air de fluidisation que l'on soutire du dispositif de refroidissement (23) et que l'on envoie également comme air secondaire au réacteur à lit fluidisé, au moins à un lit fluidisé du dispositif de refroidissement à lit fluidisé, **caractérisé par** les stades de procédé
a) on dérive une quantité partielle représentant de 10 à 25 % de la quantité totale de l'hydroxyde d'Al partiellement déshydraté arrivant du premier dispositif (3) de séparation et on la fait contourner par un conduit (14) de dérivation le lit fluidisé circulant, la quantité restante étant chargée dans le réacteur (8) en passant par le deuxième préchauffeur (5) et par le deuxième dispositif (7) de séparation,
b) on mélange le courant (13) partiel dérivé du conduit de retour à la quantité partielle de l'hydroxyde d'Al partiellement déshydraté provenant du conduit (14) de dérivation pendant un laps de temps d'au moins 2 min et on produit ainsi un mélange chaud de produit, et
c) on envoie ce mélange de produit d'abord dans un dispositif (15, 16, 17, 18, 19, 20) de refroidissement de suspension à plusieurs étages dans lequel on le refroidit en contact direct avec de l'air qui est envoyé ensuite en tant qu'air secondaire au réacteur (8) à lit fluidisé, et ensuite on refroidit le mélange de produit pour le refroidissement final dans le dispositif (23) de refroidissement à lit fluidisé dans au moins un lit fluidisé indirectement avec de l'air pour produire de l'air (10) de fluidisation.

2. Procédé suivant la revendication 1, **caractérisé en ce que** l'on règle la perte de charge dans le réacteur (8) à lit fluidisé à moins de 100 mbar.

3. Procédé suivant la revendication 2, **caractérisé en ce que** l'on dépoussière le courant de gaz contenant de la poussière sortant du premier dispositif (3) de séparation dans un électrofiltre, et on ajoute la poussière déposée à l'hydroxyde d'Al partiellement déshydraté venant du premier dispositif de séparation.

4. Procédé suivant la revendication 1 ou l'une des suivantes, **caractérisé en ce que** l'on effectue le refroidissement final du mélange de produit dans un dispositif (23) de refroidissement à lit fluidisé à plusieurs étages, le mélange de produit venant du refroidissement de suspension étant refroidi d'abord dans le premier étage de refroidissement par échange de chaleur indirect avec de l'air pour produire l'air (10) de fluidisation pour le réacteur (8) à lit fluidisé, et ensuite dans le dispositif (23) de refroidissement à l'état fluidisé par échange de chaleur indirect avec un liquide.
